# EUROPEAN PATENT APPLICATION

(11) **EP 3 176 520 A1**
(43) Date of publication of application: **07.06.2017**
(21) Application number: 15826881.3
(22) Date of filing: 05.06.2015
(51) Int. Cl.: F25B 1/00, C09K 5/04, C10M 105/38, C10M 129/18, F25B 43/00, C10N 30/00, C10N 40/30

(54) **AIR CONDITIONER**

(30) Priority: 31.07.2014 JP 2014155692
(71) Applicant: Johnson Controls-Hitachi Air Conditioning Technology (Hong Kong) Limited, Hong Kong (CN)
(72) Inventor: TADA, Shuuhei, Tokyo 105-0022 (JP); OOTA, Ryou, Tokyo 100-8280 (JP); UEDA, Hideyuki, Tokyo 105-0022 (JP); TSUBOE, Hiroaki, Tokyo 105-0022 (JP); ENDO, Takeshi, Tokyo 105-0022 (JP); YOKOZEKI, Atsuhiko, Tokyo 105-0022 (JP); TSUKADA, Yoshiharu, Tokyo 105-0022 (JP)
(74) Representative: MERH-IP Matias Erny Reichl Hoffmann Patentanwälte PartG mbB
(86) International application number: PCT/JP2015/066277
(87) International publication number: WO 2016/017277

(57) **Abstract**

Provided herein is an air conditioner in which the acid scavenger in a refrigeration cycle is maintained over extended time periods of operation to improve reliability. The air conditioner includes a compressor 11 for compressing a refrigerant, an outdoor heat exchanger 13 for causing a heat exchange between the refrigerant and outdoor air, an indoor heat exchanger 31 for causing a heat exchange between the refrigerant and indoor air, and an expansion valve for decompressing the refrigerant. The compressor 11, the outdoor heat exchanger 13, the indoor heat exchanger 31, and the expansion valve are connected to one another with pipes to constitute a refrigeration cycle. The air conditioner uses a refrigerator oil that uses a polyol ester oil as a base oil, and that contains an alkyl glycidyl ether compound having an epoxy group.

## Description

### Technical Field

The present invention relates to air conditioners.

### Background Art

PTL 1 as related art of the present invention describes using a synthetic zeolite as a drier for a working medium in a vapor compression refrigerator using the working medium containing a refrigerant using R32 which is a hydrofluorocarbon (HFC) as an essential component, and at least one refrigerator oil selected from the group consisting of an ether refrigerator oil and an ester refrigerator oil.
PTL 2 describes improving compressor durability by inhibiting an increase of refrigerator oil acid number with the use of an alkyl glycidyl ester compound added as an acid scavenger to a polyol ester-based refrigerator oil used with refrigerant R410A, R407C, or R404A.

### Citation List

### Patent Literature

PTL 1: WO98/38264
PTL 2: JP-A-2010-139171

### Summary of Invention

### Technical Problem

A polyol ester oil having an ester group (-O-CO-), or a polyvinyl ether oil having an ether bond is used as a refrigerator oil in the refrigeration cycle of an air conditioner using a refrigerant containing 70 mass% or more of R32 which is a hydrofluorocarbon.

Ester oils such as a polyol ester oil are produced through dehydrocondensation of the feedstock acid and alcohol. However, such ester oils undergo hydrolysis in the presence of moisture, and decompose into the acid and alcohol used as feedstock.

Moisture entry in the refrigeration cycle of an air conditioner often occurs during construction work and other installation procedures. Acids produced by hydrolysis in the manner described above cause corrosion in metallic parts, or wear at the sliding portions of the compressor. PTL 1 circumvents acid generation by removing moisture with a drier provided for moisture adsorption in the cycle.

However, while the method using a drier is effective for the removal of initial moisture occurring in construction work and other installation procedures, the drier loses its effectiveness, and cannot remove moisture that enters during maintenance such as replacements after the air conditioner starts running.

As a measure against the hydrolysis due to entry of water in the cycle, a method is available that adds an acid scavenger to the refrigerator oil to cause a reaction with the acid produced by hydrolysis, and turn the acid into a substance that is harmless to the refrigeration cycle, as described in PTL 2.

However, while the acid scavenger is able to reduce the acid production due to the hydrolysis of the refrigerator oil, a large quantity of acid scavenger becomes consumed in initial stages after the installation of the air conditioner, and there is a durability issue due to acid generation over a long operation period. Specifically, a sufficient amount of acid scavenger will not be available for the moisture that enters during a post-installation maintenance procedure, and the acid scavenger fails to remove acids in the refrigeration cycle.

The present invention is intended to provide an air conditioner in which the acid scavenger in a refrigeration cycle is maintained over extended time periods of operation to improve reliability.

### Solution to Problem

In order to achieve the foregoing object, the present invention provides an air conditioner that includes a compressor for compressing a refrigerant, an outdoor heat exchanger for causing a heat exchange between the refrigerant and outdoor air, an indoor heat exchanger for causing a heat exchange between the refrigerant and indoor air, and an expansion valve for decompressing the refrigerant. The compressor, the outdoor heat exchanger, the indoor heat exchanger, and the expansion valve are connected to one another with pipes to constitute a refrigeration cycle. The air conditioner uses a refrigerator oil that uses a polyol ester oil as a base oil, and that contains an alkyl glycidyl ether compound having an epoxy group.

### Advantageous Effects of Invention

The present invention can provide an air conditioner in which the acid scavenger in a refrigeration cycle is maintained over extended time periods of operation to improve reliability.

### Brief Description of Drawings

FIG. 1 is a diagram representing the refrigeration cycle of an air conditioner according to the present invention.
FIG. 2 is a cross sectional view of a compressor used in the air conditioner according to the present invention.
FIG. 3 is a diagram representing the compatibility characteristics of refrigerator oils.
FIG. 4 is a diagram representing the relationship between moisture content and total acid number when a drier is connected to the refrigeration cycle of the air conditioner according to the present invention.
FIG. 5A is a diagram representing an example of a drier position in the air conditioner of the present invention.
FIG. 5B is a diagram representing another example of a drier position in the air conditioner of the present invention.

### Description of Embodiments

### First Embodiment

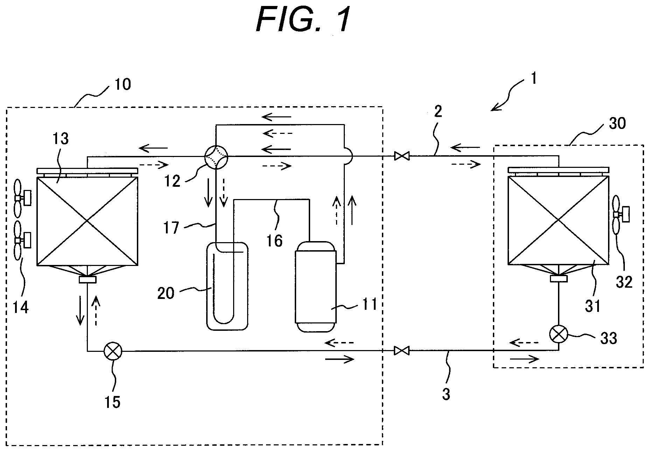

An air conditioner 1 of First Embodiment of the present invention is described below with reference to the accompanying drawings. FIG. 1 is a refrigeration cycle system diagram of the air conditioner 1. The air conditioner 1 includes an outdoor unit 10 and an indoor unit 30. The outdoor unit 10 and the indoor unit 30 are connected to each other with a gas connection pipe 2 and a liquid connection pipe 3. In the present embodiment, the outdoor unit 10 and the indoor unit 30 are connected one-to-one to each other. It is, however, possible to connect more than one outdoor unit to a single indoor unit, or more than one indoor unit to a single outdoor unit.

The outdoor unit 10 includes a compressor 11, a four-way valve 12, an outdoor heat exchanger 13, outdoor fans 14, an outdoor expansion valve 15, an accumulator 20, a compressor suction pipe 16, and a gas refrigerant pipe 17.

The compressor 11 and the accumulator 20 are connected to each other with the compressor suction pipe 16, and the four-way valve 12 and the accumulator 20 are connected to each other with the gas refrigerant pipe 17.

The compressor 11 compresses and discharges a refrigerant to a pipe. Switching the four-way valve 12 changes the refrigerant flow, and switches the operation between cooling and heating. The outdoor heat exchanger 13 causes a heat exchange between the refrigerant and outside air. The outdoor fans 14 supply outside air to the outdoor heat exchanger 13. The outdoor expansion valve 15 decompresses the refrigerant, and lowers the refrigerant temperature. The accumulator 20 is provided as a reservoir for a sudden surge of liquid to adjust the dryness of the refrigerant at an appropriate level.

The indoor unit 30 includes an indoor heat exchanger 31, an indoor fan 32, and an indoor expansion valve 33. The indoor heat exchanger 31 causes a heat exchange between the refrigerant and inside air. The indoor fan 32 supplies indoor air to the indoor heat exchanger 31. The indoor expansion valve 33 is adapted to vary the flow rate of the refrigerant through the indoor heat exchanger 31, by changing a throttle amount thereof.

The cooling operation of the air conditioner 1 is described below. Solid arrows in FIG. 1 indicate the flow of refrigerant in the cooling operation of the air conditioner 1. In the cooling operation, the four-way valve 12 connects the discharge side of the compressor 11 in communication with the outdoor heat exchanger 13, and connects the accumulator 20 in communication with the gas connection pipe 2, as indicated by solid lines.

The high-temperature and high-pressure gas refrigerant compressed and discharged by the compressor 11 flows into the outdoor heat exchanger 13 via the four-way valve 12, and is cooled to condense with the outdoor air blown by the outdoor fans 14. The condensed liquid refrigerant is sent to the indoor unit 30 through the outdoor expansion valve 15 and the liquid connection pipe 3. The liquid refrigerant flown into the indoor unit 30 is decompressed by the indoor expansion valve 33, and flows into the indoor heat exchanger 31 in the form of a low-pressure and low-temperature gas-liquid two-phase refrigerant. In the indoor heat exchanger 31, a gas-liquid two-phase liquid refrigerant is heated to evaporate with the indoor air blown by the indoor fan 32, and becomes a gas refrigerant. Here, the indoor air is cooled by the evaporative latent heat of the refrigerant, and the cooled air is sent into a room. The gas refrigerant returns to the outdoor unit 10 through the gas connection pipe 2.

The gas refrigerant returned to the outdoor unit 10 flows into the accumulator 20 through the four-way valve 12 and the gas refrigerant pipe 17. After being adjusted to a predetermined dryness of refrigerant by the accumulator 20, the gas refrigerant is drawn into the compressor 11 through the compressor suction pipe 16, and recompressed by the compressor 11 to complete the refrigeration cycle.

The heating operation of the air conditioner 1 is described below. Dotted arrows in FIG. 1 indicate the flow of the refrigerant in the heating operation of the air conditioner 100. In the heating operation, the four-way valve 12 connects the discharge side of the compressor 11 in communication with the gas connection pipe 2, and connects the accumulator 20 in communication with the outdoor heat exchanger 13, as indicated by dotted lines.

The high-temperature and high-pressure gas refrigerant compressed and discharged by the compressor 11 is sent into the indoor unit 30 through the four-way valve 12 and the gas connection pipe 2. The gas refrigerant flown into the indoor unit 30 flows into the indoor heat exchanger 31, and the refrigerant is cooled to condense with the indoor air blown by the indoor fan 32, and becomes a high-pressure liquid refrigerant. Here, the indoor air is heated by the refrigerant, and the heated air is sent into the room. The liquefied refrigerant returns to the outdoor unit 10 through the indoor expansion valve 33 and the liquid connection pipe 3.

The liquid refrigerant returned to the outdoor unit 10 is decompressed at a predetermined amount by the outdoor expansion valve 15, and flows into the outdoor heat exchanger 13 in a low-temperature gas-liquid two-phase state. The refrigerant flown into the outdoor heat exchanger 13 undergoes a heat exchange with the outdoor air blown by the outdoor fans 14, and becomes a low-pressure gas refrigerant. The gas refrigerant flown out of the outdoor heat exchanger 13 flows into the accumulator 20 through the four-way valve 12 and the gas refrigerant pipe 17, and adjusted to a predetermined dryness of refrigerant by the accumulator 20. The gas refrigerant is then drawn into the compressor 11, and recompressed by the compressor 11 to complete the refrigeration cycle.

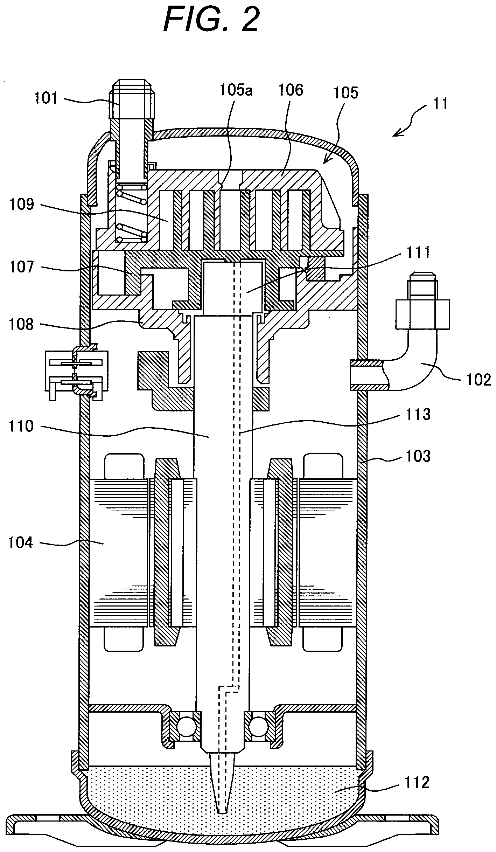

FIG. 2 shows a cross section of a sealed-type compressor as an example of the compressor structure used for the air conditioner. The sealed-type compressor may have various forms, and may be, for example, a scroll type, a rotary type, or a reciprocating type. The following descriptions are given through the case where the sealed-type compressor is a scroll type compressor.

The compressor 11 includes a frame 108, and a fixed scroll 106 forming a spiral scroll, which are fixed in a sealed container 103. At the center of the frame 108 is provided a rotation shaft 110 that is driven to rotate by a motor 104, and the upper part of the rotation shaft has a crank pin 111 that eccentrically rotates by the rotation of the rotation shaft 110. The crank pin 111 engages the bearing of the orbiting scroll 107 supported by the frame 108. The orbiting scroll 107 forms a spiral scroll that is in mesh with the fixed scroll 106, forming a compression chamber 109 where the refrigerant is compressed. With this structure, the refrigerant is compressed in the compression chamber 109 as the orbiting scroll 107 orbits following the rotation of the rotation shaft 110 and the crank pin 111.

The following describes the compression process of the refrigerant. The gas refrigerant circulated through the refrigeration cycle enters the compression chamber 109 through an suction pipe 101. The gas refrigerant in the compression chamber 109 is compressed as the volume inside the compression chamber 109 becomes smaller by the orbital movement of the orbiting scroll 107, and discharged into the discharge pressure space through an outlet 105a provided at the center. The compressed gas refrigerant in the discharge pressure space is discharged through a discharge pipe 102.

Inside the rotation shaft 110 is an oil channel 113 for supplying an oil for lubricating the sliding surface between the orbiting scroll 106 and the fixed scroll 107. The refrigerator oil is stored in an oil reservoir 112 at the bottom of the compressor.

In the present embodiment, the refrigerator oil stored at the bottom of the compressor for lubrication of the compressor sliding portions uses, for example, a polyol ester oil having an ester group (-O-CO-).

This type of refrigerator oil is produced through dehydrocondensation of an acid and an alcohol, and as such hydrolysis, the reverse of dehydrocondensation, occurs and the acid generates when moisture is present with the refrigerator oil. Installation or piping of an air conditioner involves a risk of moisture entry, and hydrolysis may occur in the refrigeration cycle as noted above. Acid generation in the refrigeration cycle causes metal corrosion, or wear in sliding portions of the compressor. This may lead to poor air conditioner reliability.

There is also a risk of moisture entry after the installation of an air conditioner, particularly industrial air conditioners with a cooling capacity of 7.1 kw or more, which require parts replacements or other such maintenance procedures. Industrial air conditioners are also used as a system of many connected indoor units, and the total pipe length extends to as long as several tens of meters. For example, air conditioners having a cooling capacity of 12.5 kW, intended for shops and restaurants have a total acceptable pipe length as long as 75 m. Construction work for such air conditioners thus involves vacuuming. It is, however, not always possible to remove all moisture.

In the air conditioner of the present invention, an acid scavenger that reacts with the acid produced by hydrolysis, and that turns into a harmless substance in the refrigeration cycle is added to the refrigerator oil. Desirably, the acid scavenger is an epoxy-based acid scavenger, specifically an alkyl glycidyl ether compound as a reaction product of an alcohol and epichlorohydrin, represented by [Chemical Formula 1]. 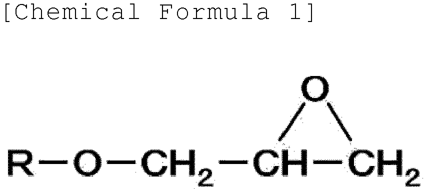 R represents an alkyl group

The acid scavenger used in the present embodiment is an ether compound. However, when an ester compound is used, it reacts with the acid produced by hydrolysis, and with water before hydrolysis. The remaining amount of ester compound in the refrigeration cycle thus tends to be smaller, and the ester compound loses its acid scavenging ability shortly after the operation of the air conditioner.

On the other hand, the ether compound added as an acid scavenger has a high reaction rate for the problematic acids produced by hydrolysis in the refrigeration cycle, and a small reaction rate for water. The ether compound can thus remain in the refrigeration cycle even after a long operation of the air conditioner. The ability of the acid scavenger to remove acid can thus be maintained for extended time periods after the operation of the air conditioner.

In hydrofluorocarbon refrigerants containing R32, the alkyl glycidyl ether compound turns into a low-viscosity liquid that easily dissolves in the ester base oil when the alkyl group has 4 to 10 carbon atoms, and exhibits high acid scavenging ability with the improved dispersibility.

Desirably, the acid scavenger is added in an amount of 0.1 to 1.0 mass% of the refrigerator oil. When added in smaller amounts, the acid scavenger cannot scavenge acids in sufficient absolute amounts in the refrigerator oil. When the acid scavenger is added in amounts above the foregoing range, the C4-C10 alkyl glycidyl ether compound exhibits a viscosity lowering property when added to the refrigerator oil, and the refrigerator oil fails to form an oil film at the compressor sliding portions because of the reduced viscosity. This causes wear, and leads to poor reliability. For example, when the acid scavenger is added in an amount of 1.0 mass% of the refrigerator oil, a viscosity drop of about 6 mm²/s occurs at an oil temperature of 40°C. The acid scavenging performance of the acid scavenger also deteriorates when polymerization occurs between acid scavenger molecules.

Table 1 shows the results of heat deterioration tests conducted with different acid scavengers. The acid scavengers shown in the table were adjusted to contain the same amount of an epoxy group having an acid scavenging ability. In other words, the acid scavengers have the same level of acid scavenging ability, in theory.

**[Table 1]**

| | Heating time (hr) | Initial total acid number (mgKOH/g) | Total acid number after deterioration (mgKOH/g) | Amount of remaining acid scavenger (%) |
|---|---|---|---|---|
| Ex. 1 | 504 | 0.009 | 0.019 | 84 |
| Com. Ex. 1 | 504 | 0.008 | 0.011 | 0 |
| Com. Ex. 2 | 504 | 0.008 | 0.028 | 91 |

The heat deterioration test was conducted with the refrigerant R32 and a polyol ester oil sealed inside a pressure vessel in the presence of a metal catalyst. In Comparative Example 1, the alkyl glycidyl ester compound represented by Chemical Formula 2 was added. In Comparative Example 2, the cycloglycidyl ether compound represented by Chemical Formula 3 was added. 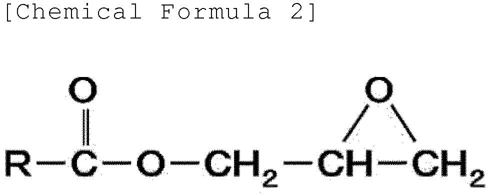 R represents an alkyl group

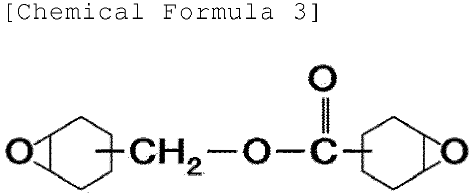

The heat deterioration test was conducted by promoting deterioration under applied heat to simulate deterioration of an industrial air conditioner as might occur after 10 years of operation. In Comparative Example 1, the percentage of remaining acid scavenger was small, and the acid scavenger failed to show sufficient acid scavenging ability after a long operation. In Comparative Example 2, a sufficient amount of acid scavenger remained because of the ether compound used as in Example 1. However, the acid scavenging ability was low, and the total acid number was high.

In contrast, the refrigerator oil used in the air conditioner of the present invention had a total acid number within an acceptable range for a refrigeration cycle (at most 0.02 mgKOH/g), though the value itself was higher than that observed in Comparative Example 1. The acid scavenger also remained, and the acid scavenging ability was maintained even after a long operation.

As described above, industrial air conditioners with a cooling capacity of 7.1 kw or more involve a high chance of moisture entry after construction work or other procedures such as relocation and unit replacements, and acid production due to hydrolysis of the refrigerator oil is more likely to occur than in home air conditioners. The acid scavenger is thus added according to the present invention to maintain refrigerator oil stability for extended time periods, and ensure air conditioner reliability.

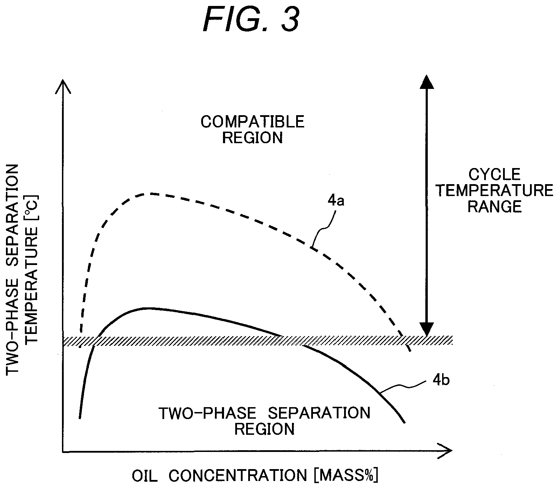

FIG. 3 represents the two-phase separation characteristics of a refrigerator oil for R32 and a refrigerator oil for the traditional refrigerant R410A of when a refrigerant containing 70 mass% or more of R32 was used as a working refrigerant of a refrigeration cycle. The upper side of curves 4a and 4b in the figure represents the compatible (miscible) region of the liquid refrigerant and the refrigerator oil, and the lower side represents the separation region of the liquid refrigerant and the refrigerator oil.

It is desirable that the liquid refrigerant and the refrigerator oil be uniformly compatible (miscible) with each other in the air conditioner. However, separation may occur in low-temperature portions of the refrigeration cycle when there is a large density difference between the liquid refrigerant and the refrigerator oil. FIG. 3 represents the two-phase separation temperature against the oil concentration in the liquid refrigerant. When a refrigerator oil for traditional refrigerants, for example, R410A, is used in an air conditioner using a refrigerant containing 70 mass% or more of R32, the two-phase separation temperature increases, and the two-phase separation region becomes wide in the operating temperature range of the air conditioner, as indicated by curve 4a. This results in poor compatibility between the refrigerant and the refrigerator oil is poor.

Two-phase separation occurring between the liquid refrigerant and the refrigerator oil in the compressor installed in the outdoor unit sends the liquid refrigerant to sliding portions, and causes a lubrication failure. The refrigerator oil also turns into a mist form by being mechanically acted upon during the compressor operation, and discharged toward the cycle side. When the compatibility is low, the refrigerator oil stagnates at low-temperature pipe portions of the cycle or in the tank, and the amount of oil returning to the compressor becomes smaller. This causes oil deficiency in the compressor, which leads to a lubrication failure.

The compatibility between the refrigerator oil and the refrigerant thus needs to be improved in an air conditioner using R32 (difluoromethane) of large molecular polarization as the refrigerant. The curve 4b in FIG. 3 represents an example of the two-phase separation characteristics of the refrigerator oil that has been adjusted to have a molecular structure that improves the compatibility for R32.

However, the refrigerator oil having improved compatibility with R32 (difluoromethane) of large molecular polarization also captures water (H₂O) of large molecular polarization as easily as for R32. Specifically, the refrigerator oil used for an air conditioner using a refrigerant containing 70 mass% or more of R32 has high hygroscopicity in the presence of moisture. The acid scavenger added according to the present invention ensures air conditioner reliability for extended time periods, and the invention can effectively exhibits its effects even when moisture enters the refrigeration cycle, and causes hydrolysis of the refrigerator oil.

In an air conditioner using a refrigerant containing 70 mass% or more of R32, the acid scavenger added needs to have heat resistance because the R32 refrigerant, with an adiabatic index different from that of a traditional refrigerant, for example, R410A, becomes high temperature when the air conditioner is operated in the same manner as in an air conditioner using R410A. The heat deterioration test showed that a certain fraction of acid scavenger remains, and the acid scavenger of the present invention can maintain its acid scavenging ability even under the high temperature and high pressure of the refrigerant R32. This ensures long-term reliability of the air conditioner even in air conditioners using 70 mass% or more of R32 as the refrigerant.

Desirably, the refrigerator oil used for the air conditioner of the present invention has a viscosity of 40 mm²/s to 100 mm²/s at an oil temperature of 40°C. With a viscosity smaller than this range, the refrigerator oil cannot form an oil film at compressor sliding portions, and causes problems, including lubrication failure, and poor efficiency due to an improperly sealed compression chamber. When the viscosity is higher than the foregoing range, mechanical losses such as viscosity resistance, and frictional resistance increase, and the compressor efficiency suffers.

### Second Embodiment

In the present embodiment, a drier for adsorbing moisture is installed to remove the initial moisture occurring or entering at the time of construction work or other installation procedures, in addition to the air conditioner of First Embodiment. This prevents hydrolysis of the refrigerator oil, and consumption of the acid scavenger in the initial operation of the air conditioner can be avoided to maintain the acid scavenging effect for extended time periods.

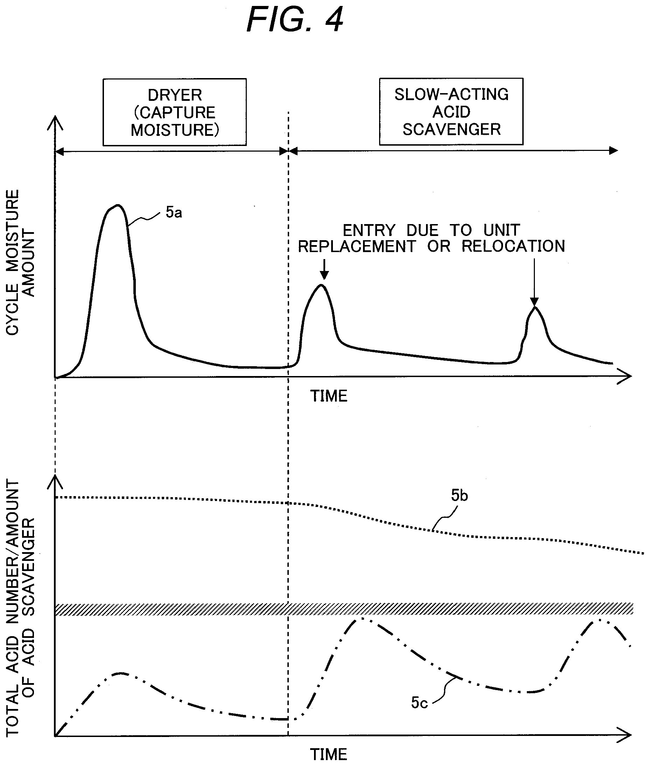

FIG. 4 is an example diagram representing the moisture content, the amount of acid scavenger, and the total acid number in a cycle with a drier installed in the air conditioner of the present invention. The curves 5a, 5b, and 5c represent the moisture content, the amount of acid scavenger, and the total acid number, respectively, in the cycle during operation. The total acid number shows an increase at early stages of air conditioner operation because of the moisture entry occurring at the time of construction or other installation work. However, the total acid number does not show a drastic increase because the drier installed in the cycle removes moisture before large hydrolysis takes place. After halfway through the operation, the acid scavenger of the present invention added to the refrigerator oil is able to remove acids produced by moisture entry during procedures such as unit replacements and maintenance. This keeps the total acid number below a certain level, and the air conditioner can remain reliable for extended time periods.

The drying agent sealed inside the drier in the air conditioner is desirably selected from, for example, synthetic zeolites made of a composite of alkali metal silicates and alkali metal aluminates. For improved moisture adsorption, it is also effective to use bead drying agents for increased surface area.

When the drier is used in the refrigeration cycle of the air conditioner and attached to the liquid connection pipe, the synthetic zeolite rubs against each other and generates an abrasive powder under the gas-liquid two-phase flow of the refrigerant. This may cause clogging in the pipe. When the drier is provided at the main flow portion of the liquid connection pipe, a pressure loss may increase at the impurity capturing and packing portion, and lower the performance of the air conditioner 1.

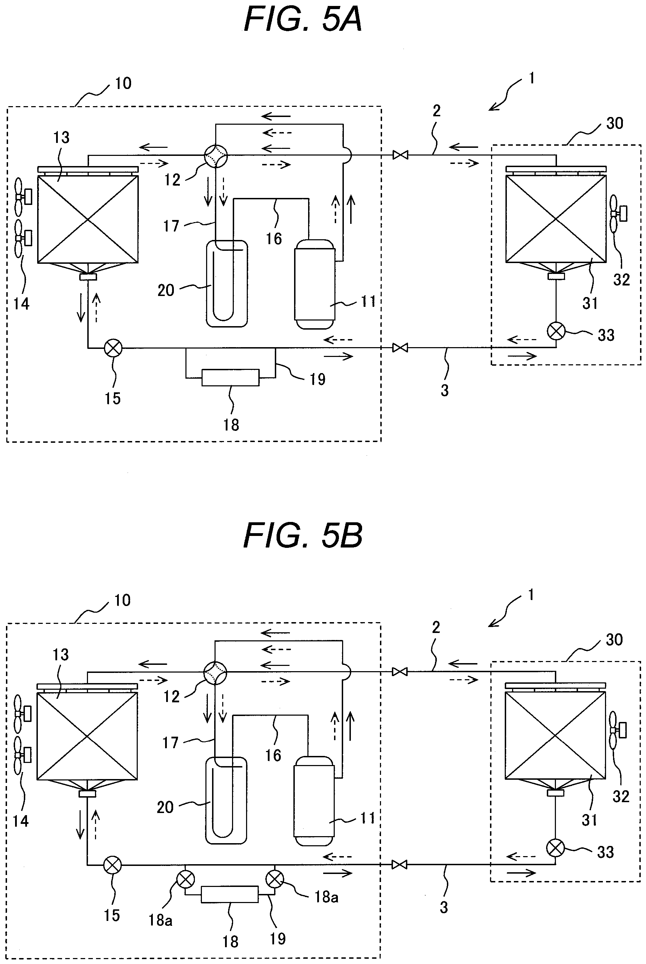

FIG. 5A represents an embodiment intended to circumvent this problem. A bypass pipe 19 is provided parallel to the liquid connection pipe 3, bypassing the liquid connection pipe 3 connecting the outdoor unit 10 and the indoor unit 30 of the air conditioner 1. A drier 18 is provided on the bypass pipe 19. This reduces the resistance in the refrigerant channel, and enables capturing moisture and acid without lowering the performance of the air conditioner 1.

Solenoid valves 18a for opening and closing the channel may be provided on the both sides of the drier 18 on the bypass pipe 19, as shown in FIG. 5B. The solenoid valves 18a may be opened only when the flow is determined to be solely of the liquid refrigerant from the temperature and pressure of the liquid connection pipe 3, and the refrigerant flow may be bypassed to remove moisture. In this way, clogging of pipes and valves due to the generation of an abrasive powder from the drier 18 can be prevented. The solenoid valves 18a may be controlled so that the valves are closed after a predetermined length of operation, and are opened before staring operation after a maintenance to make the drier 18 functional only when the moisture and the acid amount have increased in the refrigeration cycle.

### Reference Signs List

- 1:: Air conditioner
- 2:: Gas connection pipe
- 3:: Liquid connection pipe
- 10:: Outdoor unit
- 11:: Compressor
- 12:: Four-way valve
- 13:: Outdoor heat exchanger
- 14:: Outdoor fans
- 15:: Outdoor expansion valve
- 16:: Compressor suction pipe
- 18:: Drier
- 18a:: Solenoid valve
- 19:: Bypass pipe
- 30:: Indoor unit
- 31:: Indoor heat exchanger
- 32:: Indoor fan
- 33:: Indoor expansion valve
- 101:: Suction pipe
- 102:: Discharge pipe
- 103:: Sealed container
- 104:: Motor
- 105:: Discharge pressure space
- 105a:: Outlet
- 106:: Orbiting scroll
- 107:: Fixed scroll
- 108:: Frame
- 109:: Compression chamber
- 110:: Rotation shaft
- 111:: Crank pin
- 112:: Oil reservoir
- 113:: Oil channel

## Claims

1. An air conditioner comprising:
a compressor for compressing a refrigerant;
an outdoor heat exchanger for causing a heat exchange between the refrigerant and outdoor air;
an indoor heat exchanger for causing a heat exchange between the refrigerant and indoor air; and
an expansion valve for decompressing the refrigerant,
the compressor, the outdoor heat exchanger, the indoor heat exchanger, and the expansion valve being connected to one another with pipes to constitute a refrigeration cycle,
wherein the air conditioner uses a refrigerator oil that uses a polyol ester oil as a base oil, and that contains an alkyl glycidyl ether compound having an epoxy group.

2. The air conditioner according to claim 1, wherein the refrigerant contains 70 mass% or more of R32 in the refrigeration cycle.

3. The air conditioner according to claim 2, wherein the alkyl glycidyl ether compound has an alkyl group of 4 to 10 carbon atoms.

4. The air conditioner according to claim 3, wherein the refrigerator oil contains the alkyl glycidyl ether compound in an amount of 0.1 to 1.0 mass%.

5. The air conditioner according to claim 1, wherein the refrigerator oil has a viscosity of 40 mm²/s to 100 mm²/s at an oil temperature of 40°C.

6. The air conditioner according to claim 1, comprising:
a liquid connection pipe that connects the indoor heat exchanger and the outdoor heat exchanger via the expansion valve;
a bypass pipe connected in parallel to the liquid connection pipe; and
a drier provided on the bypass pipe to adsorb moisture inside the refrigeration cycle.

7. The air conditioner according to claim 6, comprising solenoid valves for opening and closing a channel, the solenoid valves being provided on both sides of the drier on the bypass pipe.

8. The air conditioner according to any one of claims 1 to 7, which has a rated cooling capacity of 7.1 kW or more.
